# EUROPÄISCHE PATENTSCHRIFT

(11) **EP 0 571 865 B1**
(45) Veröffentlichungstag und Bekanntmachung des Hinweises auf die Patenterteilung: **09.10.1996**
(21) Anmeldenummer: 93108036.0
(22) Anmeldetag: 17.05.1993
(51) Int. Cl.: C04B 35/10, B24D 3/16, C08J 5/14, C09K 3/14

(54) **Gesinterte Verbundschleifkörner, Verfahren zu ihrer Herstellung sowie deren Verwendung**
Sintered composite abrasive grains, method of preparation and use thereof
Grains composites frittés abrasifs, procédé de préparation et utilisation

(30) Priorität: 29.05.1992 DE 4217720
(43) Veröffentlichungstag der Anmeldung: 01.12.1993
(73) Patentinhaber: H.C. Starck GmbH & Co. KG, D-38642 Goslar (DE)
(72) Erfinder: Möltgen, Paul, Dr., W-7887 Laufenburg (DE); Winter, Gerhard, Prof. Dr., W-3380 Goslar (DE); Fister, Dietmar, Dr., W-7886 Murg 2 (DE); Wilhelm, Pirmin, W-7880 Bad Säckingen (DE)
(74) Vertreter: Steiling, Lothar, Dr.

(56) Entgegenhaltungen:
- EP-A- 0 395 087
- EP-A- 0 491 184
- US-A- 4 844 848
- US-A- 5 090 970
- US-A- 5 094 672

## Beschreibung

Die vorliegende Erfindung betrifft gesinterte Verbundschleifkörner auf Basis einer α-Al₂O₃-Matrix und mindestens eines Hartstoffes, Verfahren zu ihrer Herstellung und deren Verwendung.

Der Preis der sogenannten Superabrasives, CBN (Kubisches Bornitrid) und Diamant, beträgt das Tausend- bis Zehntausendfache des Preises der konventionellen Schleifkörner wie SiC und Al₂O₃. Trotzdem konnten sich Schleifwerkzeuge aus diesen Superabrasives in vielen Bereichen gegen die konventionellen Schleifmittel durchsetzen, da sich aufgrund ihrer Leistungsstärke, gepaart mit einer Reduzierung von Maschinenstillstandszeiten, Einsparung von Arbeitskräften u. a. gegenüber den konventionellen Schleifmitteln klare wirtschaftliche Vorteile ergeben.

Natürliche und synthetische Diamantschleifkörnungen haben eine besondere Bedeutung bei der Bearbeitung von Naturstein, Beton, Glas, Keramik, verstärkten Kunststoffen, Edelmetallen, Hartmetallen und anderen Kubisches Bornitrid bietet besonders wirtschaftliche Bearbeitungsmöglichkeiten für harte Eisenwerkstoffe und andere metallische Werkstoffe.

Eingeschränkt wird die Anwendung von CBN allerdings immer dann, wenn beim Einsatz bei weniger anspruchsvollen Schleifoperationen die hohe Leistungsfähigkeit des CBN nicht voll zum Tragen kommt.

Hinzu kommt, daß für das Arbeiten mit CBN-Werkzeugen eine spezielle maschinelle Ausrüstung notwendig ist, was entsprechende Investitionen voraussetzt, die sich nur für Schleifoperationen rechnen, bei denen CBN seine Leistungsstärke auch entfalten kann.

Der Einsatz von Diamant hat sich bereits wesentlich stärker durchgesetzt, was nicht zuletzt auch daran liegt, daß das Haupteinsatzgebiet für Diamant die Gesteinsbearbeitung ist, bei der konventionelle Schleifmaterialien aus SiC fast vollständig durch Diamantwerkzeuge substituiert wurden.

In der neueren Zeit wurden Schleifkörner auf der Basis von Submicron-Al₂O₃ beschrieben, die in einem günstigen Preis-/Leistungsbereich zwischen den konventionellen Schleifmitteln und den Superabresives einzuordnen sind. Entsprechende gesinterte Schleifkörner auf Basis von Submicron-Al₂O₃ können auf einer Vielzahl von Wegen, die fast immer auf der Sol-Gel-Methode basieren, hergestellt werden. Das US-A 4 314 827 sowie die EP-A 152 768 und EP-A 408 771 sollen hier nur beispielhaft genannt werden für die zahlreichen, in der neueren Zeit erschienenen Veröffentlichungen und Patente, die sich mit der Herstellung von Sol-Gel-Schleifkörnern befassen.

In der US-A 5 090 970 werden Schleifscheiben beschrieben, die aus einer Mischung von Superabrasive-Körnern mit mikrokristallinen α-Al₂O₃-Körner, die über den Sol-Gel-Prozess erhalten wurden, aufgebaut sind. Schon mit geringen Anteilen an CBN werden erstaunlich hohe Schleifleistungen erzielt, was man darauf zurückführt, daß im Gegensatz zur Offenbarung der US-A 4 652 277, in der Kombination von SiC und Al₂O₃ mit Superabrasives beschrieben sind, erstmals das konventionelle Korn nicht als Füllmaterial für die Scheiben anzusehen ist, sondern aktiv am Schleifprozess teilnimmt und die Effektivität des Schleifprozesses steigert.

Ebenso werden in der EP-A-0 395 087 sowie der US-A-4 844 848 Schleifkörper, die Mischungen aus α-Al₂O₃-Körnern und Hartstoffen enthalten, beschrieben.

Der Nachteil dieser Methode ist, daß die Schleifkörner zwar insgesamt in der Scheibe weitgehend homogen verteilt werden können, aber eine gleichmäßige Verteilung der einzelnen Kornart nicht garantiert werden kann. Da die Schleifkörner aber schon allein aufgrund der enormen Härteunterschiede unterschiedliche Verschleißmechanismen zeigen, wird die gesamte Scheibe nicht gleichmäßig verbraucht, so daß sich in Abhängigkeit von der jeweiligen Schleifoperation die Abrichtzyklen erhöhen, wodurch die Effektivität des Schleifprozesses gemindert wird.

Ein weiterer Nachteil dieses Verfahrens ist, daß diskrete Körner unterschiedlicher Art eingesetzt werden. Für jede Kornart gibt es spezielle Bindungen, die auf das Einsatzgebiet abgestimmt sind. Bei der Verarbeitung vollkommen unterschiedlicher Kornarten in einer Scheibe, muß man notgedrungen Kompromisse bei der Optimierung der Bindung eingehen, so daß das volle Potential, das in der jeweiligen Kornkombination steckt, nicht genutzt werden kann.

In der DE-A 2 414 047 werden Kompositschleifmaterialien beschrieben, die aus einer mikroporösen Metalloxidmatrix, in die hitzeempfindliche Schleifmittelkörner wie Diamant oder kubisches Bornitrid, deren mittlerer Durchmesser nicht größer als 25 µm ist, eingelagert sind, bestehen.

Hierbei geht es darum, äußerst feine Schleifkörnungen verarbeitbar zu machen. Die Matrix, die aus SiO₂, Al₂O₃, TiO₂, ZrO₂ oder Kombinationen daraus bestehen kann, ist mikroporös, hat eine Härte von weniger als 1 000 Knoop und nimmt an dem Schleifprozess aktiv nicht teil.

Aufgabe dieser Erfindung ist es daher, ein Schleifkorn zur Verfügung zu stellen, welches die Nachteile des beschriebenen Standes der Technik nicht aufweist.

Die Anforderungen werden erfüllt durch gesinterte Verbundschleifkörner auf Basis einer α-Al₂O₃-Matrix und mindestens eines Hartstoffes, wobei die Primärkristallitgröße des a-Al₂O₃ im Bereich von 0,1 bis 1 µm liegt und die Hartstoffe CBN- und/oder Diamantkörner sind und in einer Menge von 0,1 bis 15 Gew.-%, bezogen auf die Verbundstoffkörner, vorliegen. Solche gesinterten Verbundschleifkörner sind Gegenstand dieser Erfindung.

Bei den erfindungsgemäßen Verbundschleifkörnern besitzt die Matrix bevorzugt eine Dichte von über 98 % der Theorie, eine Härte größer als 19 GPa (HV 200 / Vickers) und nimmt aufgrund ihrer mikrokristallinen Struktur aktiv am Schleifprozess teil. Ein weiterer Vorteil der erfindungsgemäßen Verbundschleifkörner ist, daß sie sehr hohen Anpreßdrücken während des Schleifens ausgesetzt werden können, so daß ihre Einsatzmöglichkeiten und Leistungsfähigkeit weit über die in der DE-A 2 414 047 beschriebenen Verbindungen hinausgehen.

Die erfindungsgemäße submicrone-α-Al₂0₃-Matrix kann bevorzugt über das Sol-Gel-Verfahren erhalten werden.

Die Submicron-Struktur der erfindungsgemäßen α-Al₂O₃-Matrix kann als Ursache für die hervorragenden Schleifeigenschaften der erfindungsgemäßen Schleifkörner angesehen werden. Während des Schleifprozesses brechen kleinere Bereiche aus dem Schleifkorn heraus, wodurch neue Schneidkanten in den Schleifprozess wieder aktiv eingreifen können. Durch diesen Selbstschärfemechanismus wird die Schleifleistung gegenüber herkömmlichen, geschmolzenen oder gesinterten Schleifkörnern erheblich gesteigert.

Überraschend ist, daß durch den erfindungsgemäßen Einbau von Hartstoffen aus der Gruppe der Superabrasives in die Submicron-α-Al₂0₃-Matrix enorme Schleifleistungen erzielt werden können, was auf den immer noch funktionierenden Schleifmechanismus der Matrix, kombiniert mit der hohen schleifaktiven Wirkung von CBN bzw. Diamant, zurückzuführen ist.

Besonders gute Schleifresultate können erzielt werden, wenn die Hartstoffe Korngrößen von 1 bis 70 m, bevorzugt von 10 bis 50 m, aufweisen. Somit können preiswerte Feinstkörnungen eingesetzt werden.

Die erfindungsgemäßen Verbundschleifkörner erbringen bereits sehr gute Schleifleistungen bei geringen Hartstoffzusätzen. So beträgt die bevorzugte Menge der Hartstoffe 0,5 bis 5 Gew.-%, bezogen auf die Verbundschleifkörner. Hierdurch liegen die erfindungsgemäßen gesinterten Verbundschleifkörner im Preis/Leistungs-Verhältnis günstiger als die sogenannten Superabrasives und können gleichzeitig zu Schleifmitteln verarbeitet werden, die analog zu den Schleifmitteln aus konventionellen Schleifkörnungen aufgebaut sind.

Voraussetzung für die Erzielung hoher Schleifleistungen ist eine gute Einbindung des Hartstoffes in die Matrix.

Es wurde gefunden, daß die Einbindung um so besser ist, je feiner die Al₂O₃- Matrix strukturiert ist. Es kann daher vorteilhaft sein, Sinteradditive einzusetzen, die das Kristallwachstum der Matrix günstig beeinflussen.

Als Sinterhilfen kommen entweder Kristallisationskeime (arteigene = α-Al₂O₃ oder artfremde wie Fe₂O₃, Cr₂O₃, Ti₂O₃ o.a.) oder Kristallwachstumsinhibitoren (Spinelle, Spinellbildner wie MgO, CoO, NiO, ZnO, Oxide wie HfO₂, TiO₂, Al₂TiO₅, CeO₂, ZrO₂, CuO, Li₂O, SrO, BaO, K₂O, Nb₂O₅, SiO₂, B₂O₃ o. a.) in Frage.

Es ist auch möglich, Kombinationen aus verschiedenen Sinteradditiven oder entsprechende Vorstoffe einzusetzen, die sich bei den Reaktionsbedingungen zu einem oder mehreren der obengenannten Sinterhilfen umsetzen.

Sehr gute Ergebnisse können auch mit einer Kombination aus Nb₂O₅ und MgO oder mit feinstvermahlenem SiC erzielt werden. Auch andere feinstvermahlene Carbide wie Cr₂C₃, TiC, NbC, TaC o.a. können vorteilhaft als Sinteradditive eingesetzt werden. Die Primärkristallitgröße der Produkte, die mit Hilfe dieser Sinteradditive erhalten werden können, liegen unter 0,2 micron und haben Härten von 22 bis 23 GPa (Vickers).

Ohne zusätzlichen Einsatz von Sinteradditiven und/oder Kristallisationskeimen kann man ein Schleifkorn erhalten, dessen Matrix aus Al₂O₃-Kristalliten aufgebaut ist, deren Primärkristallgröße bevorzugt unter 0,4 micron liegt.

Es kann erfindungsgemäß weiterhin voteilhaft sein, die Einbindung der Hartstoffe in die Matrix dadurch zu verbessern, daß der Hartstoff mit einer Ummantelung versehen wird. Beste Ergebnisse werden mit keramischen Ummantelungen erzielt.

Als Ummantelung können handelsübliche keramische Binder für Superabrasives eingesetzt werden, die als wäßrige Suspension auf den Hartstoff aufgetragen, anschließend getrocknet und gebrannt werden. Die während dieses Vorganges gebildeten Agglomerate müssen nach dem Trocknen wieder getrennt werden, damit die ummantelten Hartstoffe als diskrete Partikel im Verbundkorn eingesetzt werden können` Naturgemäß empfiehlt es sich insbesondere bei der Ummantelung von Diamant diese unter Inertbedingungen durchzuführen.

Die Ummantelung bewirkt eine Vergrößerung der Oberfläche des Hartstoffes, wodurch der Halt in der Matrix verbessert wird.

Als zusätzlicher positiver Effekt ist zu erkennen, daß die Glasphase in die Matrix diffundiert und eine zusätzliche Bindungsverstärkung bewirkt.

Vorteilhaft auf die Matrix wirkt sich zusätzlich aus, daß Bestandteile der keramischen Ummantelung wie SiO₂, MgO o. a. als Sinterhilfen wirksam sind.

Bevorzugt beträgt die Menge der Beschichtung 0,1 bis 30 Gew.-%, bevorzugt 0,5 bis 10 Gew.-%, bezogen auf den eingesetzten Hartstoff.

Die erfindungsgemäßen Verbundschleifkörner zeichnen sich durch eine enorme Vielseitigkeit aus, da man je nach Anwendungszweck durch einfache Variation der Korngröße des Hartstoffes, der Menge und der Art des Hartstoffes sowie durch zusätzlichen Einsatz von Sinteradditiven die Möglichkeit hat, für eine Vielzahl von Schleifoperationen das optimale Schleifkorn zu entwickeln.

Der Vorteil gegenüber den in der US-A 5 090 970 beschriebenen Schleifkörpern ist, daß es mit den erfindungsgemäßen Verbundkörnern gelingt, Superabrasives vollkommen homogen in Schleifkörper einzuarbeiten. Ein weiterer Vorteil ist, daß man schon mit vergleichsweise sehr wenig Anteil an Hartstoff (CBN) zu sehr guten Schleifresultaten kommt. So konnten mit Verbundkörnern, die lediglich 2 Gew.-% CBN, bezogen auf die Al₂O₃-Matrix enthielten, hervorragende Schleifresultate erzielt werden.

Gegenstand dieser Erfindung ist auch ein Verfahren zur Herstellung der erfindungsgemäßen gesinterten Verbundschleifkörner, wobei ein üblicherweise hergestelltes Al₂O₃-Sol oder -Gel mit Hartstoffpartikeln definierter Korngröße versetzt, anschließend getrocknet, kalziniert und gesintert wird, sowie die Verwendung der erfindungs-gemäßen gesinterten Verbundschleifkörner zur Herstellung von Schleifmitteln oder Schleifwerkzeugen.

Im folgenden wird die Erfindung beispielhaft erläutert, ohne daß darin eine Einschränkung zu sehen ist.

### Beispiele

### Beispiel 1

500 g Aluminiumoxidmonohydrat (Disperal der Fa. Condea) wurden in 2 1 Wasser unter Zusatz von Säure (HNO₃) dispergiert. Die Suspension wurde zentrifugiert, um den nicht dispergierten Anteil an Ausgangsmaterial (ca. 2 %) abzutrennen. Unter ständigem Rühren wurde die Suspension zum Sieden erhitzt und mit 7 g CBN mit einer mittleren Korngröße von ca. 22 µm (SBN-B der Fa. Showa Denko), das zuvor mit einer Glasfritte ummantelt worden war, versetzt.

Die Glasfritte bestand zu 45 % aus SiO₂, 30 % B₂O₃, 15 % Al₂O₃, 2 % CaO und 8 % MgO. Die Glasfritte wurde als wäßrige Suspension mit dem Hartstoff vermischt, anschließend getrocknet, die gebildeten Agglomerate wurden zerkleinert und die diskreten CBN-Körner bei ca. 700°C gesintert. Der Ummantelungsanteil betrug ca. 3 %, bezogen auf den Hartstoff.

Vor der Hartstoffzugabe wurde Salpetersäure zugetropft, um den Gelierungsvorgang zu beschleunigen. Einige Minuten nach vollständiger Zugabe des Hartstoffes war der Gelierungsvorgang abgeschlossen. Das Gel wurde homogenisiert und bei 80°C im Trockenschrank getrocknet. Anschließend wurde das getrocknete Gel kalziniert, wobei es über 3 Stunden schrittweise auf 500°C erhitzt wurde. Bei dieser Temperatur konnten die Wasser- und Säurereste vollständig entfernt werden, so daß anschließend bei 1 240°C 4 Stunden gesintert werden konnte.

Nach dem Sintern wurden die Verbundschleifkörner auf die gewünschte Korngröße zerkleinert.

### Analyse

| Hartstoffanteil | Härte (HV 0,2) | Dichte | durchschnittliche Kristallitgröße | |
|---|---|---|---|---|
| | | | Matrix | CBN |
| 2 % CBN | 2 240 | 98 % | 0,4 µm | 22 µm |

### Beispiel 2

Es wurde wie in Beispiel 1 beschrieben vorgegangen. Vor dem Zentrifugieren wurden jedoch ca. 4 % α-Al₂O₃-Keime mit einer mittleren Korngröße von 0,3 µm zugegeben. Die Suspension wurde dann zentrifugiert, um neben dem nicht dispergierten Anteil des Ausgangsmaterials den großkörnigen Anteil der Keime abzutrennen. Die Weiterverarbeitung des Sols erfolgte wie in Beispiel 1.

### Analyse

| Hartstoffanteil | Härte (HV 0,2) | Dichte | durchschnittliche Kristallitgröße | |
|---|---|---|---|---|
| | | | Matrix | CBN |
| 2 % CBN | 2 340 | 98 % | 0,1 µm | 22 µm |

### Beispiel 3

Es wurde entsprechend dem Beispiel 2 verfahren. Das CBN wurde jedoch ohne zusätzliche Ummantelung eingesetzt.

Kalziniert wurde nach einem speziellen Programm mit Haltezeiten bei 95°C, 170°C und 440°C. Der gesamte Kalzinierprozess dauerte ca. 6 Stunden.

### Analyse

| Hartstoffanteil | Härte (HV 200) | Dichte | durchschnittliche Kristallitgröße | |
|---|---|---|---|---|
| | | | Matrix | CBN |
| 2 % CBN | 2 280 | 98 % | 0,2 µm | 22 µm |

### Schleiftest

Das Verbundkorn wurde in der FEPA-Norm F 80 in einer Scheibe mit der Abmessung 100 mm x 20 mm eingesetzt.

### schleifbedingungen

Vorschubgeschwindigkeit 1 000 mm/min
Scheibenumfanggeschwindigkeit 20 m/s
Zustellung 0,05 mm
Abtragsfläche 20 mm x 10 mm
Werkstoff HSS-S 700, 65 HRC

| Schleifkorn | Schleifleistung (G-Faktor) |
|---|---|
| Edelkorund Weiß | 50 |
| Beispiel 1 | 850 |
| Beispiel 2 | 1 100 |
| Beispiel 3 | 600 |
| CBN | 1 800 |

## Patentansprüche

1. Gesinterte Verbundschleifkörner auf Basis einer α-Al₂O₃-Matrix und mindestens eines Hartstoffes, dadurch gekennzeichnet, daß die Primärkristallitgröße des α-Al₂O₃ im Bereich 0,1 bis 1 µm liegt, die Hartstoffe CBN- und/oder Diamantkörner sind und in einer Menge von 0,1 bis 15 Gew.-%, bezogen auf die Verbundstoffkörner, vorliegen.

2. Gesinterte Verbundschleifkörner gemäß Anspruch 1, dadurch gekennzeichnet, daß die α-Al₂O₃-Matrix über das Sol-Gel-Verfahren erhalten wurde.

3. Gesinterte Verbundschleifkörner gemäß einem der Ansprüche 1 oder 2, dadurch gekennzeichnet, daß die Hartstoffe Korngrößen von 1 bis 70 µm, bevorzugt 10 bis 50 µm, aufweisen.

4. Gesinterte Verbundschleifkörner gemäß einem oder mehreren der Ansprüche 1 bis 3, dadurch gekennzeichnet, daß die Menge der Hartstoffe 0,5 bis 5 Gew.-%, bezogen auf die Verbundschleifkörner, beträgt.

5. Gesinterte Verbundschleifkörner gemäß einem oder mehreren der Ansprüche 1 bis 4, dadurch gekennzeichnet, daß der Hartstoff CBN ist, das vorher mit einer keramischen Beschichtung versehen wurde.

6. Gesinterte Verbundschleifkörner gemäß einem oder mehreren der Ansprüche 1 bis 4, dadurch gekennzeichnet, daß der Hartstoff Diamant ist, welcher vorher mit einer keramischen Beschichtung versehen wurde.

7. Gesinterte Verbundschleifkörner gemäß einem der Ansprüche 5 oder 6, dadurch gekennzeichnet, daß die Menge der Beschichtung 0,1 bis 30 Gew.-%, bevorzugt 0,5 bis 10 Gew.-%, bezogen auf den eingesetzten Hartstoff, beträgt.

8. Verfahren zur Herstellung gesinterter Verbundschleifkörner gemäß einem oder mehreren der Ansprüche 1 bis 7, dadurch gekennzeichnet, daß ein auf übliche Weise hergestelltesα-Al₂O₃-Sol oder -Gel mit Hartstoffpartikeln versehen wird.

9. Verwendung der gesinterten Verbundschleifkörner gemäß einem oder mehreren der Ansprüche 1 bis 7 zur Herstellung von Schleifmitteln oder Schleifwerkzeugen.

## Claims

1. Sintered composite abrasive grits based on an α-Al₂O₃ matrix and at least one hard material,
characterised in that the primary crystallite size of the α-Al₂O₃ is in the range 0.1 to 1 µm, the hard materials are CBN and/or diamond granules and are present in an amount of 0.1 to 15 wt.%, with reference to the composite grit.

2. Sintered composite abrasive grits according to Claim 1, characterised in that the α-Al₂O₃ matrix was obtained by the sol-gel method.

3. Sintered composite abrasive grits according to one of Claims 1 or 2, characterised in that the hard materials have grain sizes of 1 to 70 µm, preferably 10 to 50 µm.

4. Sintered composite abrasive grits according to one or more of Claims 1 to 3, characterised in that the amount of hard material is 0.5 to 5 wt.%, with reference to the amount of composite abrasive grit.

5. Sintered composite abrasive grits according to one or more of Claims 1 to 4, characterised in that the hard material is CBN which has previously been provided with a ceramic coating.

6. Sintered composite abrasive grits according to one or more of Claims 1 to 4, characterised in that the hard material is diamond which has previously been provided with a ceramic coating.

7. Sintered composite abrasive grits according to one of Claims 5 or 6, characterised in that the amount of coating is 0.1 to 30 wt.%, preferably 0.5 to 10 wt.%, relative to the hard material used.

8. A process for the preparation of sintered composite abrasive grits according to one or more of Claims 1 to 7, characterised in that an Al₂O₃ sol or gel, prepared in the conventional way, is provided with particles of hard material.

9. Use of the sintered composite abrasive grits according to one or more of Claims 1 to 7 to prepare abrasives or grinding tools.

## Revendications

1. Grains abrasifs composites frittés à base d'une matrice en α-Al₂O₃ et d'au moins une substance dure, caractérisés en ce que la grosseur de cristallite primaire d'α-Al₂O₃ est de l'ordre de 0,1 à 1 µm, que les substances dures sont des grains de CBN et/ou de diamant et sont présentes en une quantité de 0,1 à 15 % en poids par rapport aux grains de composite.

2. Grains abrasifs composites frittés selon la revendication 1, caractérisés en ce que la matrice en α-Al₂O₃ a été obtenue par le procédé sol-gel.

3. Grains abrasifs composites frittés selon la revendication 1 ou 2, caractérisés en ce que les substances dures présentent des grosseurs de grain de 1 à 70 µm, de préférence de 10 à 50 µm.

4. Grains abrasifs composites frittés selon une ou plusieurs des revendications 1 à 3, caractérisés en ce que la quantité de substances dures est de 0,5 à 5 % en poids par rapport aux grains abrasifs composites.

5. Grains abrasifs composites frittés selon une ou plusieurs de revendications 1 à 4, caractérisés en ce que la substance dure est du CBN doté préalablement d'un revêtement céramique.

6. Grains abrasifs composites frittés selon une ou plusieurs des revendications 1 à 4, caractérisés en ce que la substance dure est du diamant préalablement doté d'un revêtement céramique.

7. Grains abrasifs composites frittés selon la revendication 5 ou 6, caractérisés en ce que la quantité de revêtement est de 0,1 à 30 % en poids, de préférence de 0,5 à 10 % en poids, par rapport à la substance dure utilisée.

8. Procédé de fabrication de grains abrasifs composites frittés selon une ou plusieurs des revendications 1 à 7, caractérisé en ce qu'un sol ou gel d'α-Al₂O₃ préparé de façon usuelle est doté de particules de substance dure.

9. Utilisation des grains abrasifs composites frittés selon une ou plusieurs des revendications 1 à 7 pour la fabrication d'agents abrasifs ou d'outils de rectification.
